Europäisches Patentamt

(19) European Patent Office

Office européen des brevets

(11) Publication number: **0 060 947**
**B1**

(12) **EUROPEAN PATENT SPECIFICATION**

(45) Date of publication of patent specification: **23.09.87**

(21) Application number: **81301267.1**

(22) Date of filing: **24.03.81**

(51) Int. Cl.⁴: **G 01 K 3/04,** G 01 K 7/00

(54) **Time-temperature indicator apparatus.**

(43) Date of publication of application:
**29.09.82 Bulletin 82/39**

(45) Publication of the grant of the patent:
**23.09.87 Bulletin 87/39**

(84) Designated Contracting States:
**AT BE CH DE FR IT LI LU NL SE**

(56) References cited:
**US-A-2 980 754**
**US-A-3 102 425**
**US-A-3 688 296**
**US-A-3 773 563**
**US-A-3 931 619**

(73) Proprietor: **Karr, Lawrence J.**
**1349 West Washington Boulevard**
**Venice California 90291 (US)**
(73) Proprietor: **Kaye, Stanton H.**
**2216 Los Angeles Street**
**Berkeley California 94707 (US)**

(72) Inventor: **Karr, Lawrence J.**
**1349 West Washington Boulevard**
**Venice California 90291 (US)**
Inventor: **Kaye, Stanton H.**
**2216 Los Angeles Street**
**Berkeley California 94707 (US)**

(74) Representative: **Laight, Martin Harvey**
**W H Beck, Greener & Company**
**7 Stone Buildings Lincoln's Inn**
**London WC2A 3SZ (GB)**

EP 0 060 947 B1

Courier Press, Leamington Spa, England.

## Description

The present invention relates to time-temperature indicator apparatus for indicating the deterioration of a packaged, perishable product that deteriorates at a rate approximately exponentially related to the temperature of the product.

The shelf life of many products, including food, drugs, and film (photographic and x-ray), is determined by the ambient temperature to which the product is exposed. Generally, the higher the temperature, the lower the shelf life. Time-temperature indication by chemical means is known. An indicator material is separated from a reactant material for the indicator by a diffusion barrier. Passage of the reactant through the diffusion barrier depends upon the ambient temperature. In one such time-temperature indicator, disclosed in US Patent 3,967,579, the reactant has a clearly defined melting point at a preselected temperature; when the ambient temperature rises above the preselected value, the reactant melts and begins to flow through the diffusion barrier to the indicator. In another such time-temperature indicator, which is disclosed in US Patent 4,057,029, the diffusion barrier changes from an impermeable state to a permeable state at a clearly defined preselected temperature. In both the described devices, the rate of passage of the reactant above the preselected temperature is essentially independent of the ambient temperature, i.e., below the preselected temperature there is no passage of reactant, and above the preselected temperature there is passage at an almost constant rate. But, the shelf life of many products is a continuous, usually, an inverse exponential, function of ambient temperature; as the ambient temperature rises, the shelf life gradually decreases. Thus, the described time-temperature indicators do not adequetely account for how much higher the ambient temperature is than the preselected temperature.

Another time-temperature indicator is disclosed in US Patent 2,782,749, and is based on the use of temperature sensitive materials having non-specific melting points, such as fats and waxes, which gradually become less viscous as temperature increases. These temperature sensitive materials are formed as a layer on a porous paper barrier, and at or above a predetermined temperature, the fat or wax begins to diffuse through the paper barrier and eventually reaches a point of visibility on the opposite side of the barrier. The rate of diffusion of the material through the barrier is directly related to the temperature. Devices of the type, due to the nature of fats and waxes, have a relatively narrow temperature range at which they can be used and it is difficult to control the diffusion rate through the paper barrier. In addition, the paper barrier must be relatively thick, of the order of 1.905 cm (0.75 inches), so that the device is relatively bulky, thus giving rise to handling and storage problems when attached to packages or containers.

In US Patent No. 3688296 there is disclosed an electronic time and temperature monitoring apparatus directed to the problem of detecting damage to produce by exposure to undesirable high temperatures during shipping, and also of detecting/recording at what stage during the shipping the deterioration occurred. This double requirement gives a need for a extremely complex and expensive device, and in particular requires the provision of four electrolytic cells having four different functions. The first electrolytic cell circuit is adjusted to the optimum temperature for the goods being shipped. No current flows at this temperature. On the temperature rising above the optimum temperature, current flows, and the amount of plating on the electrolytic cell is a measure of the deleterious temperature to which the commodity has been subjected, combined with the time to which it is subjected to the deleterious temperature. A second electrolytic cell circuit is employed to function as a clock to give an accurate measure of the total transit time. A third electrolytic cell is arranged to deplate if the temperature passes above or below a critical range, and deplates only while the temperature is outside that range. If this electrolytic cell becomes completely deplated the entire circuit is opened, which activates a flash bulb to discolour a window covered with a heat sensitive paper. The warns that the commodity has probably deteriorated. A fourth electrolytic cell is employed to indicate at what point in transit the most injurious temperatures have been accumulated. The fourth cell normally plates at a steady rate, similar to the second cell, but upon activation of the flash bulb the fourth cell circuit is opened thereby stopping the electrolytic plating of the fourth cell.

In accordance with the present invention there is provided apparatus for indicating the deterioration of a product with which it is associated and which deteriorates at a rate related to the temperature of the product, the apparatus comprising a galvanic cell having a consumable electrode and an electrolyte, arranged to pass current in a manner dependent upon the temperature of the product, and circuit means including a semiconductor device connected to said cell and means for producing a visual indication when the time integral of the current passing through the cell has reached a predetermined value, to indicate the likelihood that the product has deteriorated beyond an acceptable limit,

characterised in that the apparatus is suitable to be attached to the packet of a packaged product that deteriorates at a rate approximately exponentially related to the temperature of the product,

in that said galvanic cell is a substantially planar, label-like, galvanic cell having a patterned mask positioned between said electrode and the electrolyte and protecting a predetermined portion of said consumable electrode against galvanic erosion to provide said predetermined visual indication, and in that the circuit means including the semiconductor device, is such that the instantaneous amplitude of said current at any given time is a direct and substantially exponential function of the temperature at such time, with said function substantially corresponding to the deterioration rate, as a function of the temperature of the product to which the apparatus is to be attached, whereby said current consumes that portion of the consumable electrode not protected by said patterned mask, exposing the electrolyte to view through said electrode and providing a visual indication corresponding to the pattern of said mask.

In one form, said semiconductor device comprises a transistor having its collector and emitter electrodes connected in a series circuit with said galvanic cell and having a current drain characteristic such that the collector current is a substantially exponential function of temperature over the temperature range to which the perishable product is likely to be exposed, and said circuit means comprises bias-circuit means for applying a substantially constant forward bias voltage to the base-emitter circuit of said transistor of a magnitude such that said current characteristic is adjusted to substantially correspond to the deterioration rate characteristic, as a function of temperature, of said packaged product.

Preferably said semiconductor device comprises a transistor having its collector and emitter electrodes connected in a series circuit with said galvanic cell and having a current drain characteristic such that the collector current is a substantially exponential function of temperature over the temperature range to which the perishable product is likely to be exposed, and said circuit means comprises bias-circuit means connected between the emitter and base electrodes for applying a forward bias voltage to the base of said transistor which varies as a preselected function of temperature for adjusting said current drain characteristic to substantially correspond to the deterioration rate as a function of the temperature of said packaged product where the deterioration rate at each temperature is the reciprocal of the shelf life of the product at that same temperature.

In some arrangements said bias voltage may be arranged to vary as an increasing function of temperature, and in other arrangements said bias voltage may be arranged to vary as a decreasing function of temperature.

Conveniently said galvanic cell provides the electromotive force for energizing the emitter-to-collector circuit of said transistor.

Also conveniently the predetermined portions of the consumable electrode are separated from the electrolyte by a layer of electrolyte-resistive material disposed on the consumable electrode in a predetermined pattern such that upon complete erosion of the unmasked portions of the consumable electrode the electrolyte becomes visible through said unmasked portions to provide a visual indication corresponding to said predetermined pattern.

Further conveniently the several elements of the apparatus are constructed and arranged to form a planar assembly having a thickness of about 0.127 cm (0.05 inches) or less and with the length and width both being at least an order of magnitude greater than the thickness.

Preferably the galvanic cell functions simultaneously as a current integrator, an indicating pattern display mechanism, and a power source for energizing the collector-to-emitter circuit of said transistor.

In convenient arrangements, the consumable electrode of the galvanic cell is zinc, a second electrode is carbon, and the electrolyte includes manganese dioxide, zinc chloride and ammonium chloride.

The present invention accomplishes time-temperature indication by electrical means, namely, by generating an electrical current having an amplitude-temperature relationship that is proportional to the reciprocal of the time-temperature relationship of a characteristic of a substance to be monitored. The current is integrated to represent the generated charge. An indication is given when the generated charge reaches a predetermined value, to signal a change in the characteristic of the substance being monitored. By way of example, the change in the characteristic could represent spoilage of the substance being monitored; in such case the time-temperature relationship represents shelf life.

The invention permits a continuous time-temperature measurement to be made that precisely matches the relationship between product characteristics, such as shelf life, and temperature. It is contemplated that time-temperature indicators embodying the invention can be mass produced by very low cost by using existing integrated circuit technology and related manufacturing techniques.

Embodiments of the invention will now be described by way of example with reference to the accompanying drawings, in which:

Figure 1 a schematic circuit diagram of a time-temperature indicator embodying the invention;

Figure 2 is a side sectional view of a product package including a time-temperature indicator embodying the invention;

Figures 3A, 3B, and 3C are graphs depicting current, temperature, and time relationships illustrating the operation of the embodiment; and

Figure 4 is a schematic circuit diagram of an alternative version of a voltage reference source, which permits variation of the relationship between the current generated by the circuit of Figure 1 and the ambient temperature.

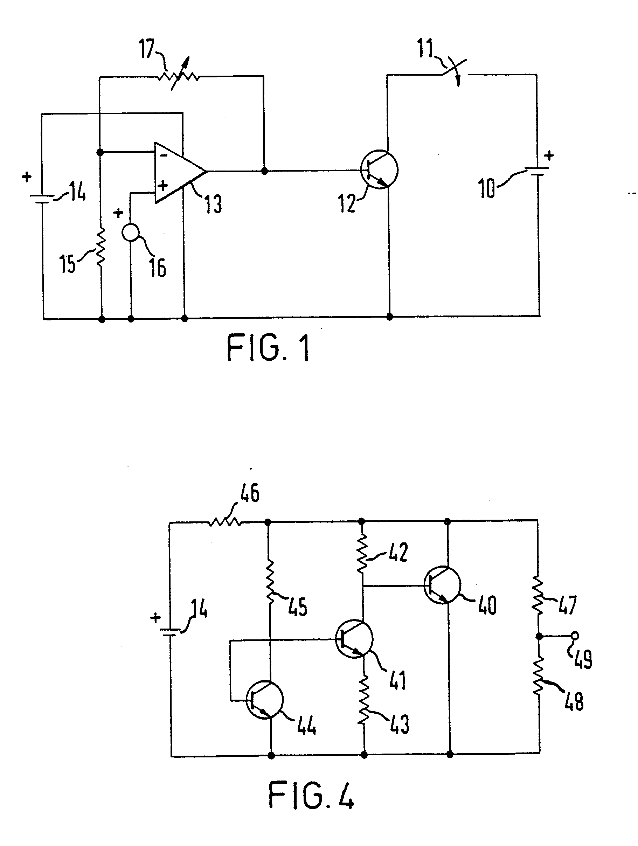

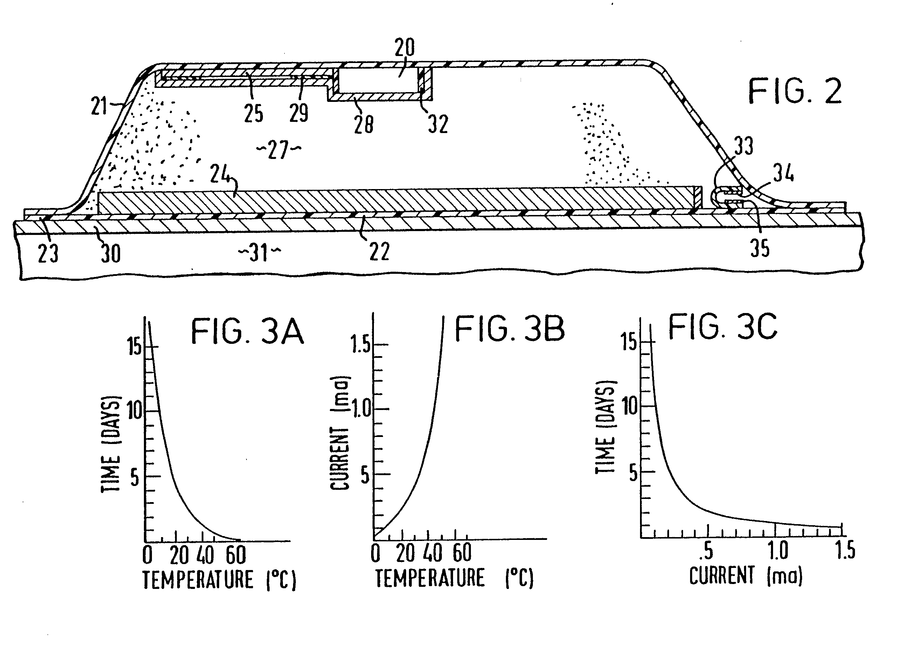

In Figure 1, a so-called Leclanché cell 10, has a consumable zinc anode, a carbon cathode, an ammonium chloride electrolyte, a positive output terminal connected to the carbon electrode, and a negative output terminal connected to the zinc electrode. The zinc electrode has a known mass, and therefore a known number of zinc atoms available for ionization, i.e., charge capacity. (The charge capacity of one gram of zinc is 0.000225 coulombs (0.81 ampere-hours). The positive output terminal of cell 10 is directly connected by a normally open, manually operable switch 11 to the collector of an NPN transistor 12. The negative output terminal of cell 10 is directly connected to the emitter of transistor 12. Transistor 12 is completely untemperature compensated, and its collector-to-emitter current, and thus the current drawn from cell 10, is a function of temperature, as called for by the well known junction transistor equation. An operational amplifier 13 has an output connected to the base of transistor 12. A battery 14, which could also comprise a Leclanche cell, or other type of galvanic cell, has output terminals connected to the power supply inputs to operational amplifier 13. The charge capacity of battery 14 is large enough to supply power until the zinc electrode of cell 10 is consumed. (if battery 14 is a Leclanche cell, its components including the zinc electrode are sufficiently large as not to be consumed before the zinc electrode of cell 10). A resistor 15 is connected between the negative input of operational amplifier 13 and the negative output terminal of battery 14. A source of positive reference voltage 16, which is a source of voltage having a very constant magnitude for all temperature and load conditions, is connected between the positive input of operational amplifier 13 and the negative output terminal of battery 14. An adjustable feedback resistor 17 is connected from the output of operational amplifier 13 to its negative input. After switch 11 is closed, current is drawn from cell 10 through transistor 12. The constant reference voltage from source 16 is amplified by operational amplifier 13, which serves to present a very low, almost zero, source impedance to transistor 12. By virtue of the constant base-to-emitter bias across transistor 12, the current drawn from cell 10 is a function of the ambient temperature and, more particularly, a direct exponential function thereof. When current is drawn from cell 10, its zinc electrode is consumed. As the ambient temperature increases, the current drawn from cell 10 increases and the time interval until the zinc electrode is consumed decreases. Thus, the zinc electrode of cell 10 functions as a coulombmeter, integrating the temperature dependent current drawn from cell 10. When a certain percentage of the zinc electrode, most conveniently 100%, is consumed an indication is given, for example, in the manner described below in connection with Figure 2.

In one embodiment, transistor 12 is a 2N3904 type transistor; operational amplifier 13 including source 16 is a monolithic linear integrated circuit (national Semiconductor LM10/LM10B (L)/LM10C(L) Op Amp and Voltage Reference wherein the Op Amp is unutilized, the output terminals of battery 14 are connected to pins 7 and 4, respectively, the junction of resistors 15 and 17 is connected to pin 8, and the base of transistor 12 is connected to pin 1); source 16 is 200 millivolts; battery 14 is 1.4 volts, resistor 15 is 100,000 ohms, and resistor 17 varies between 180,000 and 270,000 ohms.

In Figure 2, transistor 12, operational amplifier 13, source 16, and resistors 15 and 17 are incorporated into an integrated circuit as indicated by the dashed-line box 20. Sheets of transparent film 21 and 22, of a suitable dielectric material such as Mylar, of the order of .0254 mm (1 mil) thick, have contiguous peripheral edges that are joined together by a heat seal 23 to form a completely closed envelope for the time-temperature indicator.

In addition to integrated circuit chip 20, this envelope contains a carbon electrode 24, a zinc electrode 25, an electrolyte 27, a separator 28, an indicator 29, and switch 11 (see Fig. 1). Sheet 22 is secured by adhesive or the like to a package 30 for a product 31, such as food, photographic or x-ray film, or drugs. In one embodiment, electrode 24 comprises a graphite-loaded, vinyl sheet in the order of .0762 mm (3 mils) thick, electrode 25 comprises a sheet of pure zinc .0254 mm (1 mil) thick, electrolyte 27 comprises a black pasty mixture of manganese dioxide, zinc chloride, ammonium chloride, and water in the order of 1.016 mm (40 mils) thick, separator 28 comprises a layer of porous paper in the order of .0254 mm (1 mil) thick, and indicator 29 is a patterned mask or resist of material impervious to electrolyte 27, such as waterproof ink, in the order of 0.127 mm (0.5 mils) thick. Thus, the assembly takes the physical form of a substantially planar label-like member that can be attached to a perishable product or its container. Electrode 24 is secured to the inside of sheet 22, electrode 25 is secured to the inside of sheet 21, and electrolyte 27 fills the space between the electrodes. Indicator 29 is coated on the surface of electrode 25 opposite sheet 21. Indicator 29 is a patterned mask in the sense that it forms an outline or negative image of letters such as "SPOILED", "CONTAMINATED", "REJECT", or other symbols communicating that the shelf life of product 31 has been exceeded. As current is drawn by transistor 12 (Figure 1), the portions of electrode 25 not covered by indicator mask 29 are consumed, leaving the masked portions thereof intact. The portion of sheet 21 contiguous to electrode 25 serves as a window. Since electrode 25 is between this window and the electrolyte, it blocks the electrolyte from view until its unmasked portions are completely consumed. When the unmasked portions of electrode 25 are completely consumed, the electrolyte is exposed to view through the electrode 25 to provide a visual indication, for example a set of letters, corresponding to the pattern of these unmasked portions. The background or contrast for these letters or other visual indication is the zince remaining at the masked portions of electrode 25. It will be understood, of course, that the area of the unmasked portion of electrode 25 is designed to encompass a quantity of metal corresponding to that quantity which will be completely eroded by a through-put current integral corresponding to a predetermined degree of aging or deterioration of the perishable product. Thus, there is provided a predetermined visual display to indicate that the time integral of the product's aging rate has reached a predetermined value. It is important that electrode 25 have uniform thickness so all the letters outlined by the patterned layer become visible at about the same time. Integrated circuit chip 20 lies adjacent to electrode 25 and is electrically isolated therefrom by an insulator 32. Separator 28 envelopes electrolyte 27, electrode 25, indicator 29, and integrated circuit chip 20 for the purpose of preventing internal short circuits within the cell. Switch 11 comprises a U-shaped strip 33 of permanently deformable, electrically isolative material inside the closed envelope. Flat electrical conductors 34 and 35 are bonded on the inside, i.e., the facing surfaces of the legs of strip 33. Switch 11 is closed by pressing the right side of sheets 21 and 22, as viewed in Figure 2, together to permanently deform strip 33, leaving conductors 34 and 35 in contact with each other. Alternatively, switch 11 could be located outside the closed envelope and connected to the circuitry by lead in wires passing through heat seal 23. Battery 14 could also be located inside or outside the closed envelope, in the latter case connected to the circuitry by lead in wires passing through the heat seal. While the electrical connections between integrated circuit chip 20, electrode 24, electrode 25, battery 14, and switch 11 are not shown in Figure 2, it will be understood that a pair of interconnecting wires extend respectively from conductor 34 to the collector of transistor 12, within integrated circuit 20, and from conductor 35 to carbon electrode 24. Further, it will be understood that the assembly, shown in cross-section in Figure 2, is to be otherwise wired to implement circuit inter-connections consistent with Figure 1. Electrode 25, electrode 24, and electrolyte 27 comprise cell 10 (Figure 1). Electrode 25 has a known mass of unmasked zinc so that it contains a known number of zinc atoms available for ionization. As a result, electrode 25 is consumed after a corresponding known electrical charge has been drawn from cell 10 through transistor 12 (Figure 1).

The graph of Figure 3A depicts a typical shelf life, i.e., time interval in days, as a function of ambient temperature in degrees centigrade. For equal increments of increasing temperature, the shelf life is reduced by a constant factor, e.g., for each 10°C increase in ambient temperature the shelf life is halved. In general, the relationship between time and temperature of a product can be expressed by the equation

$$\tau = Ae^{-kT} \qquad (1)$$

where $\tau$ is the time interval, i.e., shelf life, T is ambient temperature, A is a coefficient, and $k$ is the constant representing the constant factor of reduction, i.e. the decay in shelf life.

The graph of Figure 3B depicts the current in milliamperes drawn from cell 10 as a function of ambient temperature in degrees centigrade. This graph is the reciprocal of the graph of Figure 3A. In other words, the time-temperature indicator is designed so for equal increments of increasing temperature, current drawn from cell 10 increases by the same factor as the shelf life decreases. Thus, if for each 10°C increase in ambient temperature, the shelf life is halved, the current drawn from cell 10 doubles. In general, the relationship between the current drawn from cell 10 and temperature can be expressed by the equation

$$i = Be^{kT} \qquad (2)$$

where $i$ is the current, B is a coefficient, and T and $k$ are as defined above. Comparison of equations (1) and (2) set forth above illustrates that the relationship between current and temperature is proportional to the reciprocal of the relationship between time and temperature, the constant of proportionality being determined by the coefficients A and B.

The graph of Figure 3C depicts the time interval in days required to consume the zinc electrode of cell 10 as a function of the current drawn from cell 10 in milliamperes. It can be seen that as the current increases with ambient temperature, the time interval decreases to simulate the time-temperature relationship of the product characteristic. The value of coefficient B is given by the equation

$$B = \frac{Q}{\tau}e^{-kT_R} \qquad (3)$$

where $T_R$ is room temperature, Q is the charge capacity of the zinc electrode, $\tau$ is the shelf life of the product at room temperature, and $k$ is, as defined above, the decay in shelf life. In the circuit of Figure 1, coefficient B is set by varying resistor 17. In the example shown graphically in Figures 3A, 3B, and 3C, it is assumed that $k$ is 0.0693 and Q is 0.0000066 coulom (0.024 ampere hours).

When source 16 provides a constant reference voltage of 200 millivolts and transistor 12 is a 2N3904, $k$ is approximately 0.0693, i.e., for each 10°C increment of temperature increase the current doubles. Other values of $k$ can be provided by substituting for source 16 in Figure 1, the source of reference voltage shown in Figure 4, which is a conventional band gap reference circuit. A transistor 40 has a collector connected to the positive terminal of battery 14 by a resistor 46 and an emitter directly connected to the negative terminal of battery 14. A transistor 41 has a collector connected by a resistor 42 to the collector of transistor 40 and an emitter connected by a resistor 43 to the negative terminal of battery 14. The collector of transistor 41 is also directly connected to the base of transistor 40. A transistor 44 has a collector connected by a resistor 45 to the collector of transistor 40 and an emitter directly connected to the negative terminal of battery 14. The bases of transistor 41 and 44 are directly connected together. A voltage divider is formed by resistors 47 and 48 connected in series between the collector and emitter of transistor 40. An output terminal 49 at the junction of resistors 47 and 48 is connected to the positive input of operational amplifier 13. The relationship between the voltage between the collector and emitter of transistor 40 and the temperature depends upon the resistance ratio of resistors 42 and 43. This voltage is nominally 1.2 volts. This voltage is reduced to the reference voltage of nominally 200 millivolts by the described voltage divider. For example, if the resistance ratio is a given value, the reference voltage is constant, i.e., independent of temperature; if the resistance ratio is less than the given value, the reference voltage varies inversely with ambient temperature; and if the resistance ratio is greater than the given value, the reference voltage varies directly with ambient temperature. Thus, by providing a resistance ratio that is larger than the given value, $k$ can be increased, i.e., the exponential rise of current drawn from cell 10 can be increased, and by providing a resistance ratio smaller than the given value, $k$ can be decreased to match the time-temperature characteristics of the particular product in a reciprocal manner.

The described embodiments of the invention are considered to be preferred and illustrative of the inventive concept; the scope of the invention is not to be restricted to such embodiments. Various and numerous other arrangements may be devised by one skilled in the art without departing from the scope of this invention as defined in the claims. For example, other consumable components of the battery, such as the cathode, may be used to measure charge, although the anode of the zinc-carbon battery is preferred because of the precision charge measurement that is attainable. Further, other types of galvanic cells, either primary or secondary, dry or wet, could be employed to measure charge. Instead of a transistor, a thermistor or other temperature responsive device could be used as the temperature dependent current drain.

**Claims**

1. Apparatus for indicating the deterioration of a product with which it is associated and which deteriorates at a rate related to the temperature of the product, the apparatus comprising a galvanic cell (10) having a consumable electrode (25) and an electrolyte (27), arranged to pass current in a manner dependent upon the temperature of the product (31), and circuit means including a semiconductor device (12) connected to said cell and means for producing a visual indication when the time integral of the current passing through the cell (10) has reached a predetermined value, to indicate the likelihood that the product (31) has deteriorated beyond an acceptable limit,

characterised in that the apparatus is suitable to be attached to the packet (30) of a packaged product (31) that deteriorates at a rate approximately exponentially related to the temperature of the proudct (31),

in that said galvanic cell is a substantially planar, label-like, galvanic cell (10) having a patterned mask (29) positioned between said electrode (25) and the electrolyte (27) and protecting a predetermined portion of said consumable electrode (25) against galvanic erosion to provide said predetermined visual indication, and in that the circuit means including the semiconductor device (12), is such that the instantaneous amplitude of said current at any given time is a direct and substantially exponential function of the temperature at such time, with said function substantially corresponding to the deterioration rate, as a function of the temperature of the product (31) to which the apparatus is to be attached, whereby said current consumes that portion of the consumable electrode (25) not protected by said patterned mask (29), exposing the electrolyte (27) to view through said electrode (25) and providing a visual indication corresponding to the pattern of said mask (29).

2. Apparatus according to Claim 1 in which said semiconductor device is a transistor (12) having its collector and emitter electrodes connected in a series circuit with said galvanic cell (10) and having a current drain characteristic such that the collector current is a substantially exponential function of temperature over the temperature range to which the perishable product is likely to be exposed, and

in which said circuit means comprises bias-circuit means for applying a substantially constant forward bias voltage to the base-emitter circuit of said transistor (12) of a magnitude such that such collector current, as a function of temperature is adjusted to substantially correspond to the deterioration rate as a function of the temperature of said packaged product.

3. Apparatus according to Claim 1 in which said semiconductor device comprises a transistor (12) having its collector and emitter electrodes connected in a series circuit with said galvanic cell (10) and having a current drain characteristic such that the collector current is a substantially exponential function of temperature over the temperature range to which the perishable product is likely to be exposed, and

in which said circuit means comprises bias-circuit means connected between the emitter and base electrodes for applying a forward bias voltage to the base of said transistor which varies as a preselected function of temperature for adjusting said current drain characteristic to substantially correspond to deterioration rate as a function of the temperature of said packaged product where the deterioration rate at each temperature is the reciprocal of the shelf life of the product at that same temperature.

4. Apparatus according to Claim 3 in which said bias voltage varies as an increasing function of temperature.

5. Apparatus according to Claim 3 in which said bias voltage varies as a decreasing function of temperature.

6. Apparatus according to any one of Claims 2 to 5 in which said galvanic cell (10) provides the electromotive force for energizing the emitter-to-collector circuit of said transistor.

7. Apparatus according to any preceding claim in which the predetermined portions of the consumable electrode (25) are separated from the electrolyte by a layer of electrolyte-resistive material disposed on the consumable electrode in a predetermined pattern such that upon complete erosion of the unmasked portions of the consumable electrode the electrolyte becomes visible through said unmasked portions to provide a visual indication corresponding to said predetermined pattern.

8. Apparatus according to any preceding claim wherein the several elements of the apparatus are constructed and arranged to form a planar assembly having a thickness of about 0.05 inches (i.e. about 0.127 cm) or less and with the length and width both being at least on order of magnitude greater than the thickness.

9. Apparatus according to any preceding claim wherein the galvanic cell (10) functions simultaneously as a current integrator, an indicating pattern display mechanism, and a power source for energizing the collector-to-emitter circuit of said transistor.

10. Apparatus according to any preceding claim in which the consumable electrode (25) of the galvanic cell (10) is zinc, a second electrode (24) is carbon, and the electrolyte (27) includes manganese dioxide, zinc chloride and ammonium chloride.

**Patentansprüche**

1. Vorrichtung zum Anzeigen des Verfalls oder der Verschlechterung eines Produkts, mit welchem sie verbunden ist und welches in einem Grad in Verbindung mit der Temperatur des Produktes verfällt oder sich verschlechtert, wobei die Vorrichtung ein galvanisches Element (10) mit einer selbstverzehrenden Elektrode (25) und einem Elektrolyten (27), die derart angeordnet sind, daß ein Strom abhängig von der Temperatur des Produktes (31) fließt, und eine Schaltungseinrichtung aufweist einschießlich einer Halbleitereinrichtung (12), die mit dem Element verbunden ist, und einer Einrichtung zur Erzeugung einer visuellen Anzeige, wenn das Zeitintegral des Stroms, der durch das Element (10) fließt, einen vorbestimmten Wert erreicht hat, um die Wahrscheinlichkeit anzuzeigen, daß sich das Produkt (31) über eine annehmbare Grenze hinaus verschlechtert hat, dadurch gekennzeichnet, daß die Vorrichtung geeignet ist, an dem Paket (30) eines verpackten Produktes (31) angebracht zu werden, welches sich in einem Ausmaß etwa exponentiell in Beziehung zur Temperatur des Produktes (31) verschlechtert, daß das galvanische Element ein im wesentlichen ebenes, etikettartiges galvanisches Element (10) mit einer gemusterten Maske (29) ist, die zwischen der Elektrode (25) und dem Elektrolyten (27) angeordnet ist und einen bestimmten Abschnitt der selbstverzehrenden Elektrode (25) gegen galvanische Erosion schützt, um die bestimmte visuelle Anzeige zu erbringen, und daß die Schaltungseinrichtung, die die Halbleitereinrichtung (12) umfaßt, derart ist, daß die augenblickliche Amplitude des Stroms zu irgendeiner gegebenen Zeit eine direkte und im wesentlichen eine Exponentialfunktion der Temperatur zu dieser Zeit ist, wobei die Funktion im wesentlichen der Verfalls- oder Verschlechterungsrate entspricht als eine Funktion der Temperatur des Produkts (31), an welchem die Vorrichtung angeordnet ist, wobei der Strom den Abschnitt der selbstverzehrenden Elektrode (25) verzehrt, der nicht von der gemusterten Maske (29) geschützt ist, so daß der Elektrolyt (27) dem Blick durch die Elektrode (25) ausgesetzt ist und eine visuelle Anzeige entsprechend dem Muster der Maske (29) erbringt.

2. Vorrichtung nach Anspruch 1, dadurch gekennzeichnet, daß die Halbleitereinrichtung ein Transistor (12) ist, dessen Kollektor- und Emitterelektroden in Reihenschaltung mit dem galvanischen Element (10) verbunden sind, und der eine Stromverbrauchscharakteristik derart aufweist, daß der Kollektorstrom im wesentlichen eine Exponentialfunktion der Temperatur über den Temperaturbereich ist, dem das verderbliche Produkt wahrscheinlich ausgesetzt wird, und daß die Schaltungseinrichtung eine Vorspannungsschaltungseinrichtung aufweist zur Lieferung einer im wesentlichen konstanten in Vorwärtsrichtung betriebenen Spannung zu der Basis-Emitterschaltung des Transistors (12) mit einer Größe derart, daß der Kollektrostrom als eine Funktion der Temperatur geregelt wird, um im wesentlichen der Verfallsrate als Funktion der Temperatur des verpackten Produktes zu entsprechen.

3. Vorrichtung nach Anspruch 1, dadurch gekennzeichnet, daß die Halbleitereinrichtung einen Transistor (12) aufweist, dessen Kollektor- und Emitterelektroden in Reihenschaltung mit dem galvanischen Element (10) verbunden sind und eine Stromverbrauchscharakteristik aufweisen derart, daß der Kollektorstrom im wesentlichen eine Exponentialfunktion der Temperatur über den Temperaturbereich ist, welchem das verderbliche Produkt wahrscheinlich ausgesetzt wird, und daß daß die Schalteinrichtung eine Vorspannungschalteinrichtung aufweist, die zwischen der Emitter- und der Basiselektrode vorgesehen ist zum Liefern einer in Vorwärtsrichtung betriebenen Spannung an die Basis des Transistors, welche sich als vorausgewählte Funktion der Temperatur verändert zur Einstellung der Stromverbrauchscharakteristik im wesentlichen entsprechend der Verfallsrate als Funktion der Temperatur des verpackten Produkts, wobei die Verfallsrate bei jeder Temperatur umgekehrt proportional ist zur wahren Haltbarkeit des Produkts bei derselben Temperatur.

4. Vorrichtung nach Anspruch 3, dadurch gekennzeichnet, daß die Vorspannung sich verändert als steigende Funktion der Temperatur.

5. Vorrichtung nach Anspruch 3, dadurch gekennzeichnet, daß die Vorspannung sich verändert als abnehmende Funktion der Temperatur.

6. Vorrichtung nach einem der Ansprüche 2 bis 5, dadurch gekennzeichnet, daß das galvanische Element (10) die elektromotorische Kraft zur Erregung der Emitter- zu- Kollektorschaltung des Transistors erbringt.

7. Vorrichtung nach einem der vorherigen Ansprüche, dadurch gekennzeichnet, daß die bestimmten Abschnitte der selbstverzehrenden Elektrode (25) von dem Elektrolyten getrennt sind über eine Schicht aus elektroltwiderstandsfähigem Material, daß auf der selbstverzehrenden Elektrode in einem bestimmten Muster derart angebracht ist, daß nach der vollständigen Abtragung der unmaskierten Bereiche der selbstverzehrenden Elektrode der Elektrolyt sichtbar wird durch die unmaskierten Bereiche, um eine visuelle Anzeige entsprechend des bestimmten Musters zu erbringen.

8. Vorrichtung nach einem einem der vorherigen Ansprüche, dadurch gekennzeichnet, daß die verschiedenen Elemente der Vorrichtung so konstruiert und angeordnet sind, daß sie eine ebene Anordnung mit einer Dicke von etwa 0,05 Inch (d.h. etwa 0,127 cm) oder weniger und mit einer Länge und Breite bilden, die beide wenigstens eine Größenordnung größer sind als die Dicke.

9. Vorrichtung nach einem der vorherigen Ansprüche, dadurch gekennzeichnet, daß das galvanische Element (10) gleichzeitig als Stromintegrator, als Anzeigemuster-Displaymechanismus und als Stromquelle zur Erregung der Kollektor-zu-Emitterschaltung des Transistors wirkt.

10. Vorrichtung nach einem der vorherigen Ansprüche, dadurch gekennzeichnet, daß die selbstverzehrende Elektrode (25) des galvanischen Elements aus Zink und eine zweite Elektrode (24) aus Kohlenstoff besteht und der Elektrolyt (27) Mangandioxid, Zinkchlorid und Ammoniumchlorid aufweist.

**Revendications**

1. Dispositif pour indiquer la détérioration d'un produit avec lequel il est associé et qui se déteriore à une vitesse liée à la température du produit, le dispositif comportant une pile électrochimique (10) comportant une électrode consommable (25) et un électrolyte (27), agencé pour faire passer un courant d'une façon dépendant de la température du produit (31), ainsi que des moyens formant circuit comprenant un dispositif semi-conducteur (12) relié à ladite pile et des moyens pour donner une indication visuelle quand l'intégrale en fonction du temps du courant passant dans la pile (10) a atteint une valeur prédéterminée, pour indiquer la probabilité que le produit (31) se soit détérioré au-delà d'une limite acceptable,

caractérisé en ce que le dispositif convient pour être attaché au paquet (30) d'un produit emballé (31) qui se détériore à une vitesse sensiblement exponentielle en fonction de la température du produit (31), en ce que ladite pile électrochimique est une pile (10) sensiblement plane, en plaquette, munie d'un masque dessiné (29) disposé entre ladite électrode (25) et l'électrolyte (27) en protégeant une partie prédéterminée de ladite électrode consommable (25) contre l'érosion électrochimique pour donner ladite indication visuelle prédéterminée, et en ce que les moyens à circuit comprenant le dispositif semi-conducteur (12) sont tels que la valeur instantanée dudit courant à tout instant donné est une fonction continue et sensiblement exponentielle de la température à cet instant, cette fonction correspondant sensiblement à la vitesse de détérioration, en tant que fonction de la température du produit (31) auquel le dispositif doit être fixé, ledit courant consommant ainsi la partie de l'électrode consommable (25) non protégée par ledit masque dessiné (29), en rendant visible l'électrolyte (27) à travers ladite électrode (25) et en donnant une indication visuelle correspondant au dessin dudit masque (29).

2. Dispositif selon la revendication 1, dans lequel ledit dispositif semi-conducteur est un transistor (12) ayant ses électrodes de collecteur et d'émetteur branchées dans un circuit en série avec ladite pile électrochimique (10) et présentant une caractéristique de drain en courant telle que le courant de collecteur soit une fonction sensiblement exponentielle de la température sur l'étendue de température à laquelle le produit périssable sera probablement exposé, et dans lequel lesdits moyens à circuit comportent des moyens à circuit de polarisation pour appliquer une tension de polarisation directe sensiblement constante au circuit base-émetteur dudit transistor (12), d'une valeur telle que ledit courant de collecteur soit, en tant que fonction de la température, réglé pour correspondre sensiblement à la vitesse de détérioration, fonction de la température, dudit produit emballé.

3. Dispositif selon la revendication 1, dans lequel ledit dispositif semi-conducteur comporte un transistor (12) ayant ses électrodes de collecteur et d'émetteur branchées dans un circuit en série avec ladite pile électrochimique (10) et présentant une caractéristique de courant de drain telle que le courant de collecteur soit une fonction sensiblement exponentielle de la température sur l'étendue de température à laquelle le produit périssable sera probablement exposé, et dans lequel lesdits moyens à circuit comportent des moyens à circuit de polarisation branchés entre les électrodes d'émetteur et de base pour appliquer à la base dudit transitor une tension de polarisation directe qui varie comme une fonction présélectionnée de la température pour régler ladite caractéristique de courant de drain de manière qu'elle corresponde sensiblement à la vitesse de détérioration, fonction de la température, dudit produit emballé, quand la vitesse de détérioration à chaque température est l'inverse de la durée de conservation du produit à cette même température.

4. Dispositif selon la revendication 3, dans lequel ladite tension de polarisation varie comme une fonction croissante de la température.

5. Dispositif selon la revendication 3, dans lequel ladite tension de polarisation varie comme une fonction décroissant de la température.

6. Dispositif selon l'une quelconque des revendications 2 à 5, dans lequel ladite pile électrochimique (10) engendre la force électromotrice destinée à l'alimentation du circuit émetteur-collecteur dudit transistor.

7. Dispositif selon l'une quelconque des revendications précédentes, dans lequel les parties prédéterminées de l'électrode consommable (25) sont séparées de l'électrolyte par une couche de matière ayant une résistance vis-à-vis de l'électrolyte et disposée sur l'électrode consommable suivant un dessin prédéterminé tel qu'après érosion complète des parties non masquée de l'électrode consommable, l'électrolyte devienne visible à travers les parties non masquées en donnant une indication visuelle correspondant audit dessin prédéterminé.

8. Dispositif selon l'une quelconque des revendications précédentes, dans lequel les différents éléments du dispositif sont construits et disposés pour former un ensemble plan ayant une épaisseur de 0,05 pouce environ (c'est-à-dire 0,127 cm environ) ou inférieure, la longueur et la largeur étant l'une et l'autre supérieures au moins d'un ordre de grandeur, à l'épaisseur.

9. Dispositif selon l'une quelconque des revendications précédentes, dans lequel la pile électrochimique (10) fonctionne en même temps comme un intégrateur de courant, comme un organe indicateur d'affichage de dessin, et commme une source d'énergie pour l'alimentation du circuit collecteur-émetteur dudit transistor.

10. Dispositif selon l'une quelconque des revendications précédentes, dans lequel l'électrode consommable (25) de la pile électrochimique (10) est en zinc, une seconde électrode (24) est en carbone et l'électrolyte (27) comporte du bioxyde de manganèse, du chlorure de zinc et du chlorure d'ammonium.

FIG. 1

FIG. 4

FIG. 2

FIG. 3A

FIG. 3B

FIG. 3C

0 060 947